# FASCICULE DE BREVET EUROPEEN

(11) **EP 1 449 732 B1**
(45) Date de publication et mention de la délivrance du brevet: **05.10.2011**
(21) Numéro de dépôt: 04003361.5
(22) Date de dépôt: 16.02.2004
(51) Int. Cl.: B60T 11/26, F16D 25/12, F16D 48/02

(54) **Dispositif d'alimentation pour système de freinage, notamment pour véhicule automobile et procédé de montage d'un tel système**
Versorgungseinrichtung für Bremssysteme, insbesondere für Kraftfahrzeuge sowie Verfahren zum Einbau eines solchen Systems
Supply device for braking system, in particular for vehicle and method for mounting such system

(30) Priorité: 19.02.2003 FR 0302312
(43) Date de publication de la demande: 25.08.2004
(73) Titulaire: ROBERT BOSCH GMBH, 70442 Stuttgart (DE)
(72) Inventeur: L'Aot Jean-Michel, 93200 Saint Denis (FR); Come, Philippe, 60300 Senlis (FR); Demersseman, Remi, 75004 Paris (DE); Lenczner, Sylvain, 75020 Paris (FR)
(74) Mandataire: Hurwic, Aleksander Wiktor

(56) Documents cités:
- WO-A-02/053437
- FR-A- 2 538 765
- PATENT ABSTRACTS OF JAPAN vol. 1999, no. 10, 31 août 1999 (1999-08-31) & JP 11 125272 A (NISSAN MOTOR CO LTD), 11 mai 1999 (1999-05-11)

## Description

La présente invention se rapporte principalement à un dispositif d'alimentation en liquide de frein pour système de freinage, notamment pour véhicule automobile et à un et procédé de montage d'un tel dispositif.

Il est connu (voir WO 02/053437 A1) des systèmes d'alimentation pour système de freinage comportant une réserve en liquide de frein formée par un premier réservoir principal de liquide de frein disposé à distance du maître-cylindre et par une deuxième réservoir fixé au maître-cylindre. Les premier et deuxième réservoirs sont réalisés en matériau plastique rigide, par exemple en polypropylène. Le premier et le deuxième réservoirs sont montés de manière rigide respectivement sur un élément fixe du compartiment moteur du véhicule automobile et sur le maître-cylindre.
En particulier, le premier réservoir est muni par exemple d'une ou plusieurs pattes de fixation et l'élément fixe est formé d'une plaque muni de glissières dans lequel viennent s'encliqueter les pattes de fixation du premier réservoir. Cette fixation provoque une mise sous contrainte permanente du réservoir afin de réaliser un accrochage rigide du réservoir de manière à éviter que le réservoir se décroche ou vibre.

Cependant, le matériau composant le réservoir a tendance dans la vie du véhicule à se déformer (à se détendre), ce phénomène est d'autant plus rapide que le réservoir est soumis à de nombreuses vibrations du fait du déplacement du véhicule et du fonctionnement du moteur.

La déformation du réservoir réduit alors la rigidité d'accrochage entre le réservoir et son support, ce qui est susceptible de détériorer sa connexion avec le deuxième réservoir et également de provoquer du bruit.

De plus le montage actuel nécessite une précision importante pour placer les pattes de fixation en face des glissières, ce qui implique un montage long.

Un dispositif d'alimentation selon le préambule de la revendication 1 est connu de FR 2 538 765.

C'est par conséquent un but de la présente invention d'offrir un système d'alimentation pour système de freinage à haut niveau de sécurité.

C'est également un but de la présente invention d'offrir un système d'alimentation pour système de freinage de faible niveau sonore.

C'est également un but de la présente invention d'offrir un système d'alimentation pour système de freinage à montage simplifié.

La présente invention a principalement pour objet un dispositif d'alimentation en liquide de frein pour système de freinage comportant au moins un réservoir d'alimentation d'un maître-cylindre et un support rigide pour ledit réservoir, ledit réservoir comportant des moyens d'écoulement du liquide de frein vers le système de freinage et des premiers moyens d'accrochage aptes à coopérer avec des deuxièmes moyens d'accrochage portés par le support de fixation, les premiers et deuxièmes moyens d'accrochage comportant des éléments mâles les éléments mâles étant formés par au moins un pion et des éléments femelles coopérant ensemble et des moyens élastiques étant interposés entre les éléments mâles et les éléments femelles caractérisé en ce que les moyens d'écoulement et les premiers moyens d' accrochage sont distincts, en ce que les éléments femelles sont des orifices pratiqués dans le support rigide, et en ce que les moyens élastiques sont en forme de manchon et en ce que les pions comportent des moyens de verrouillage de l'accrochage du réservoir au support rigide.

La présente invention a également pour objet un dispositif d'alimentation caractérisé en ce que les éléments mâles sont formés par au moins un pion, avantageusement trois pions, en saillie d'une paroi inférieure du réservoir.

La présente invention a également pour objet un dispositif d'alimentation caractérisé en ce que les moyens de verrouillage d'au moins un pion sont formés par un bourrelet annulaire à une extrémité du pion éloignée de la paroi inférieure du réservoir, le diamètre extérieur dudit bourrelet étant supérieur au diamètre intérieur du manchon de manière à ce que lorsque le pion est introduit dans le manchon le bourrelet soit disposé du côté opposé à la paroi inférieure du réservoir par rapport au manchon et forme une butée dans le sens d'extraction du pion du manchon.

La présente invention a également pour objet un dispositif d'alimentation caractérisé en ce que les moyens de verrouillage d'au moins un pion sont formés par un passage transversal pratiqué à une extrémité du pion éloignée de la paroi inférieure du réservoir et par une épingle destinée à pénétrer dans le passage de manière à ce que lorsque le pion est introduit dans le manchon, le passage soit disposé du côté opposé à la paroi inférieure du réservoir par rapport au manchon et à ce que l'épingle introduit dans ledit passage forme une butée dans le sens d'extraction du pion du manchon.

La présente invention a également pour objet un dispositif d'alimentation caractérisé en ce que le réservoir comporte en saillie de sa paroi inférieure un logement de réception d'un détecteur de liquide de frein et en ce que le support rigide a sensiblement la forme d'un L définissant un évidement pour recevoir ledit logement.

La présente invention a également pour objet un dispositif d'alimentation caractérisé en ce que le réservoir comporte en saillie de sa paroi inférieure un logement de réception d'un détecteur de liquide de frein et en ce qu'une entretoise est interposée entre le pion et la paroi inférieure du réservoir, ladite entretoise étant de hauteur h égale à la hauteur H du logement et de diamètre extérieur supérieure au diamètre intérieure du manchon pour venir en appui sur ledit manchon.

La présente invention a également pour objet un dispositif d'alimentation caractérisé en ce que les pions sont venus de matière avec le réservoir.

La présente invention a également pour objet un dispositif d'alimentation caractérisé ne ce que les manchons sont réalisés en élastomère.

La présente invention a également pour objet un dispositif d'alimentation caractérisé en ce que le support rigide est une plaque fixée dans un compartiment moteur d'un véhicule automobile.

La présente invention a également pour objet un dispositif d'alimentation selon la présente invention caractérisé en ce que le réservoir est un réservoir principal éloigné du circuit de freinage et en ce que le dispositif comporte également un réservoir secondaire disposé près du circuit de freinage et raccordé au réservoir principal, ledit réservoir secondaire comportant des pipes d'alimentation d'un maître-cylindre.

La présente invention a également pour objet un procédé de montage du dispositif d'alimentation selon la présente invention caractérisé en ce qu'il comporte entre autres les étapes de :
- fixer le support rigide dans le véhicule automobile ;
- introduire les manchons dans les orifices du support rigide ;
- introduire les pions dans lesdits manchons.

La présente invention a pour avantage de ne pas nécessité une grande précision lors du montage du système d'alimentation et de permettre un montage rapide sans recourir à des outillages spéciaux.

La présente invention sera mieux comprise à l'aide de la description suivante et des figures en annexe, sur lesquels :
- La figure 1 est une vue de côté d'un premier exemple et exemple préféré de réalisation d'un dispositif de freinage selon la présente invention ;
- La figure 2 est une vue partielle de dessous d'un détail d'un deuxième exemple d'un dispositif de freinage selon la présente invention ;
- Les figure 2a,2b sont des vues de détails de la figure 2 ;
- La figure 3a est une vue partielle de dessous d'un détail d'un troisième exemple de réalisation d'un dispositif de freinage selon la présente invention ;
- La figure 3b est une vue de détail de la figure 3a.

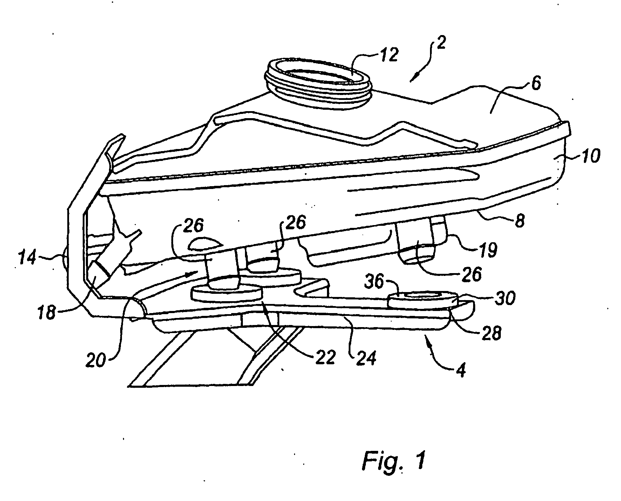

Sur la figure 1, on peut voir un dispositif de freinage selon la présente invention comportant un réservoir principal 2, un réservoir secondaire (non représenté) et un support rigide 4 fixé dans un compartiment moteur d'un véhicule automobile (non représenté).

Le réservoir principal 2 est de forme sensiblement parallélépipédique délimité par une paroi supérieure 6 et une paroi inférieure 8 raccordée par une paroi périphérique 10. La paroi supérieure comporte un orifice 12 de remplissage du réservoir en liquide, et obturé par un bouchon (non représenté), un passage de mise à l'air est prévu dans la partie supérieur du réservoir l'apparition d'une dépression dans le réservoir lors de l'écoulement du liquide de frein dans le circuit de freinage..

Le réservoir principal comporte également des premières 14 pipes de connexion du réservoir principal 2 au réservoir secondaire au moyen de tubes, avantageusement flexibles, les pipes sont venues de matière avec la paroi périphérique 10 du réservoir, le réservoir comporte également avantageusement des secondes pipes 18 de connexion au circuit d'embrayage.

Le réservoir principal comporte un détecteur de niveau de liquide de frein (non représenté) monté dans un logement 19 en saillie vers l'extérieur de la paroi inférieure 8 du réservoir.

Le réservoir secondaire comporte des pipes d'alimentation d'un maître-cylindre raccordé à des freins disposés au niveau des roues d'un véhicule automobile.

Le réservoir principal 2 comporte également des premiers moyens d'accrochage 20 coopérant avec des deuxièmes moyens d'accrochage 22 porté par le support rigide 4.

Le support rigide 4 est formé d'une plaque 24, par exemple en tôle d'acier d'épaisseur suffisante pour former un support rigide pour le réservoir principal 2, et muni d'un bras contenu dans un plan sensiblement orthogonal au plan de la plaque 24 et destiné à être fixé à au véhicule automobile, par exemple par un moyen de vis et d'écrous ou par soudage.
Dans l'exemple représenté, la plaque 24 à sensiblement le forme d'un L de manière à dégager un emplacement pour le logement 19 du détecteur de liquide de frein.

Dans l'exemple représenté, les premiers moyens d'accrochage 20 portés par le réservoir principal sont formés par au moins un pion, avantageusement trois pions 26 venus de matière avec la paroi inférieure 8 du réservoir principal. Les deuxièmes moyens d'accrochage 22 comportent des orifices 28 pratiqués dans la plaque 24 disposés de manière à coopérer avec les pions 26 portés par le réservoir. Les orifices 28 ont un diamètre intérieur sensiblement supérieure un diamètre extérieur des pions 26 et sont bordés d'un manchon 30 en matériau élastique de diamètre intérieur inférieur au diamètre extérieur des pions 26.

Le manchon comporte sur sa paroi extérieur une gorge bordant l'orifice 22 assurant le maintien axial dudit manchon 30 dans l'orifice 28.

La mise en place des pions dans les manchons s'effectue à force. Cependant du fait de l'élasticité du garnissage 30 des orifices 28, les pions ne sont pas soumis à une contrainte transversale selon l'axe des pions 26, et par conséquent ne risquent pas de se déformer dans le temps et de faire apparaître un jeu dans l'accrochage du réservoir 2 au support rigide.

Les pions 28 comportent également de manière avantageuse des moyens de verrouillage de l'accrochage entre le réservoir et la plaque 24.

De manière avantageuse, l'effort nécessaire pour la mise en place des pions dans les manchons est compris entre 80 Newtons et 120 Newtons et l'effort à exercer pour retirer les pions des manchons est compris entre 200 Newtons et 250 Newtons

Les manchons sont réalisés par exemple en élastomère, plastomère, en leur mélange ou leur alliage.

Les pions 28 comporte à leur extrémité orientée vers la plaque 24, un bourrelet annulaire 32 coaxial à l'axe du pions de manière à ce que lorsque le pion 26 a pénétré dans le manchon 30, le bourrelet soit en butée sur une face du manchon opposée à une face 36 du manchon en contact avec la paroi inférieure du réservoir 2. Dans l'exemple représenté, le bourrelet est continu, mais il est bien entendu que l'on peut prévoir un bourrelet formé de secteur répartis sur la périphérie de pion.

Le diamètre extérieur du bourrelet annulaire 32 est déterminé de manière à permettre d'une part une pénétration facilité du pion 26 dans le manchon 30, et d'autre à empêcher le retrait du pion 28 du manchon 30.

A titre d'exemple, le diamètre des pions 28 est de 13 mm, le diamètre extérieur du bourrelet 32 porté par les pions 28 est de 14,25mm, le diamètre extérieur de la gorge pratiqué dans le manchon 30 est de 13,9mm et le diamètre des orifices dans la plaque support est également de 13,9mm. Ces exemples de valeurs numériques ne sont en aucun cas limitatif. En effet le dimensionnement du réservoir par conséquent des moyens d'accrochage dépendent de la taille du circuit de freinage et des fonctions qu'il doit remplir.

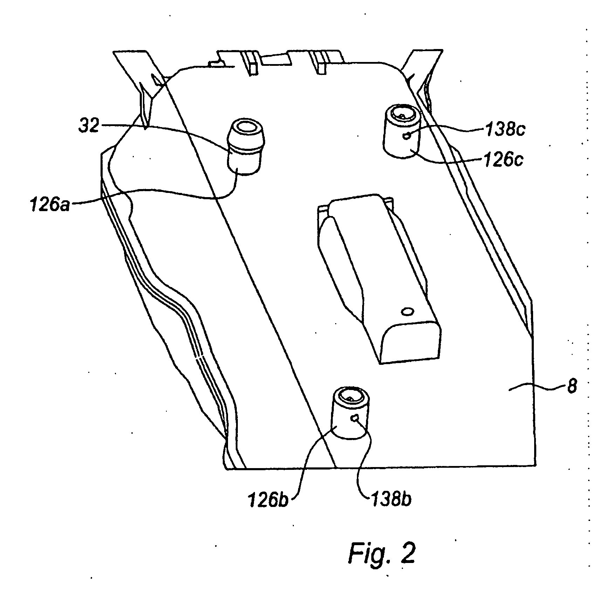

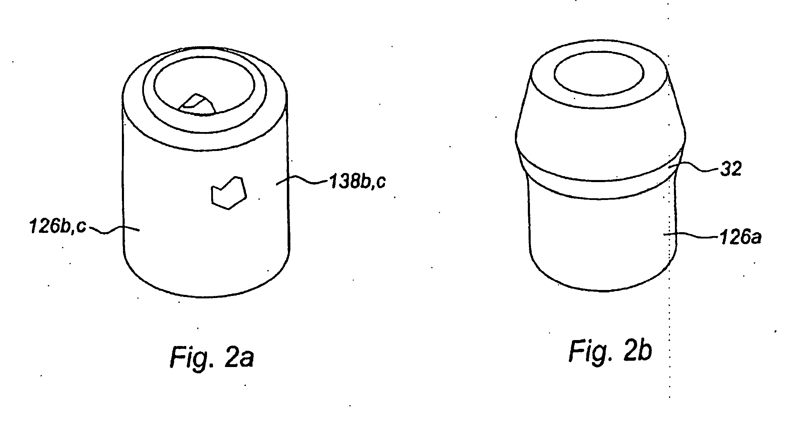

Sur les figures 2a et 2b, le réservoir comporte un premier pion 126a similaire à ceux décrits précédemment et muni d'un bourrelet 32 annulaire de verrouillage et un deuxième et troisième pion 126b et 126c, percés respectivement d'un passage 138b,138c transversal par rapport à l'axe du pion de manière à ce que lorsque les pions ont pénétré dans les manchons 30, le passage 138b,138c se trouve à l'opposé de la paroi inférieure du réservoir par rapport au manchon 30 et à ce qu'une épingle (non représentée) puisse être mise en place dans le passage 138b,138c afin de verrouiller le déplacement du réservoir par rapport à la plaque 24.

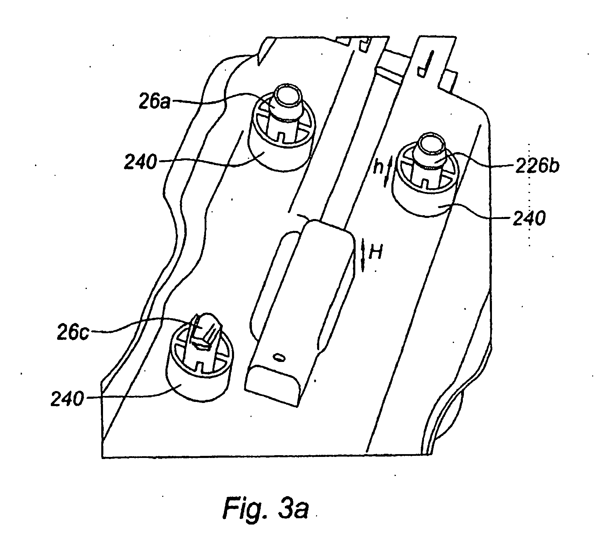

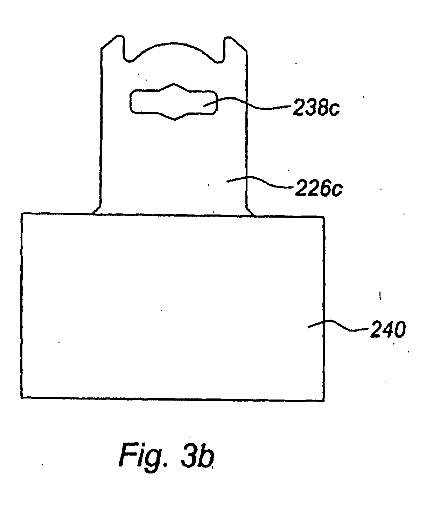

Sur les figures 3a et 3b, le réservoir comporte un premier et un deuxième pions 226a,226b muni d'un bourrelet annulaire et un troisième pion 226c muni d'un passage destiné à recevoir une épingle 238c de verrouillage. Les pions 226a,226b,226c comportent également une entretoise 240 annulaire de diamètre extérieur supérieur au diamètre intérieur des manchons 30 et de hauteur h égal à la hauteur H du logement 21 du détecteur de liquide de frein 19 orientée du côté de la paroi inférieure du réservoir. Ainsi il n'est plus nécessaire de prévoir une plaque 24 comportant un évidement pour le logement 19.

Le réservoir est par exemple réaliser en polypropylène transparent par moulage d'une coquille supérieure et d'une coquille inférieure raccordées de manière étanche par exemple par collage.

Nous allons maintenant décrire le procédé de montage du système d'alimentation d'un circuit de freinage selon la présente invention.

Ler procédé de montage comporte entre autres les étapes :
- de fixer la plaque 24 dans le compartiment moteur ;
- de placer les manchons 30 dans les orifices 28 ;
- de faire pénétrer les pions 26 dans les manchons 30 en exerçant un effort sur le réservoir en direction de la plaque 24 ; jusqu'à ce que la paroi inférieure 8 du réservoir ou la face inférieure des entretoises 240 viennent en contact de la plaque 24.

Le procédé comporte avantageusement l'étape de placer une épingle dans chaque canal transversal pratiqué dans les pions pour les réservoirs munis de manchons aptes à recevoir cette épingle.

On a bien réalisé un dispositif d'alimentation sûr, de montage rapide et de durée de vie allongée.

Il est bien entendu que la présente invention ne se limite pas aux exemples de réalisation représentés sur les figures.

Il est envisageable de prévoir de disposer les manchons 30 autour des pions et d'introduire les pions entourés des manchons dans les orifices pratiqués dans la plaque support 24.

Il est également envisageable de disposer des pions sur la plaques et des cavités de réception des pions dans la paroi inférieure du réservoir.

Dans les exemples représentés, les manchons sont des pièces rajoutés, cependant il est possible de réaliser lors d'un seule moulage, les manchons élastique sur les pions ou dans les cavités, en utilisant des thermoplastiques élastomères.

Il est également possible de remplacer l'épingle par un anneau élastique monté dans une gorge pratiquée sur la périphérie extérieure du pion.

Il est également envisageable d'avoir un réservoir ne comportant que des pions munis d'un passage transversal destiné à recevoir une épingle.

Il est bien entendu que la présente invention ne se limite pas aux dispositif d'alimentation comportant un réservoir principale et un réservoir secondaire, mais s'applique également aux systèmes d'alimentation comportant un seul réservoir fixé sur un maître-cylindre, dans ce cas, les deuxièmes moyens de fixation destinés à coopérer avec les premiers moyens de fixation du réservoir sont pratiqués dans le corps du maître-cylindre.

La présente invention s'applique notamment à l'industrie automobile.

La présente invention s'applique principalement à l'industrie du freinage pour véhicules automobiles.

## Revendications

1. Dispositif d'alimentation en liquide de frein pour système de freinage comportant au moins un réservoir (2) d'alimentation d'un maître-cylindre et un support rigide (4) pour ledit réservoir (2), ledit réservoir (2) comportant des moyens d'écoulement (14) du liquide de frein vers le système de freinage et des premiers moyens d'accrochage (20) aptes à coopérer avec des deuxièmes moyens d'accrochage (22) portés par le support de fixation (4), les premiers (20) et deuxièmes (22) moyens d'accrochage comportant des éléments mâles (26) les éléments mâles étant formés par au moins un pion et des éléments femelles (28) coopérant ensemble et des moyens élastiques (30) étant interposés entre les éléments mâles (26) et les éléments femelles (28), **caractérisé en ce que** les moyens d'écoulement (14) et les premiers moyens d' accrochage (20) sont distincts, **en ce que** les éléments femelles sont des orifices (28) pratiqués dans le support rigide et **en ce que** les moyens élastiques (30) sont en forme de manchon et **en ce que** les pions comportent des moyens de verrouillage de l'accrochage du réservoir (2) au support rigide (4).

2. Dispositif d'alimentation selon la revendication précédente **caractérisé en ce que** les moyens de verrouillage d'au moins un pion (26) sont formés par un bourrelet annulaire (32) à une extrémité du pion éloignée de la paroi inférieure (8) du réservoir, le diamètre extérieur dudit bourrelet (32) étant supérieur au diamètre intérieur du manchon (30) de manière à ce que lorsque le pion (26) est introduit dans le manchon (30) le bourrelet soit disposé du côté opposé à la paroi inférieure (8) du réservoir par rapport au manchon (30) et forme une butée dans le sens d'extraction du pion du manchon.

3. Dispositif d'alimentation selon l'une des revendications précédentes **caractérisé en ce que** les moyens de verrouillage d'au moins un pion sont formés par un passage transversal (138b,136c) pratiqué à une extrémité du pion (126b,126c) éloignée de la paroi inférieure (8) du réservoir (2) et par une épingle destinée à pénétrer dans le passage (138b,138c) de manière à ce que lorsque le pion (26) est introduit dans le manchon (30), le passage (138b,138c) soit disposé du côté opposé à la paroi inférieure (8) du réservoir par rapport au manchon (30) et à ce que l'épingle introduit dans ledit passage (138b,138c) forme une butée dans le sens d'extraction du pion (126b,126c) du manchon.

4. Dispositif d'alimentation selon l'une des revendications précédentes **caractérisé en ce que** le réservoir comporte en saillie de sa paroi inférieure (8) un logement de réception (21) d'un détecteur (19) de liquide de frein et **en ce que** le support rigide (4) a sensiblement la forme d'un L définissant un évidement pour recevoir ledit logement.

5. Dispositif d'alimentation selon l'une des revendications 1 à 4 **caractérisé en ce que** le réservoir (2) comporte en saillie de sa paroi inférieure (8) un logement de réception (21) d'un détecteur (19) de liquide de frein et **en ce qu'**une entretoise (240) est interposée entre le pion (226a,226b,226c) et la paroi inférieure (8) du réservoir, ladite entretoise (240) étant de hauteur (h) égale à la hauteur (H) dudit logement (21) et de diamètre extérieur supérieure au diamètre intérieure du manchon (30) pour venir en appui sur ledit manchon.

6. Dispositif d'alimentation selon l'une des revendications précédentes **caractérisé en ce que** les pions (26) sont venus de matière avec le réservoir (2).

7. Dispositif d'alimentation selon l'une quelconque des revendications précédentes **caractérisé** ne ce que les manchons (30) sont réalisés en élastomère.

8. Dispositif d'alimentation selon l'une des revendications précédentes **caractérisé en ce que** le support rigide (4) est une plaque fixée dans un compartiment moteur d'un véhicule automobile.

9. Dispositif d'alimentation selon l'une des revendications précédentes **caractérisé en ce que** le réservoir (2) est un réservoir principal éloigné du circuit de freinage et **en ce que** le système comporte également un réservoir secondaire disposé près du circuit de freinage et raccordé au réservoir principal, ledit réservoir secondaire comportant des pipes d'alimentation d'un maître-cylindre.

10. Procédé de montage du dispositif d'alimentation selon l'une quelconque des revendications précédentes **caractérisé en ce qu'**il comporte entre autres les étapes de :
- fixer le support rigide (4) dans le véhicule automobile ;
- introduire les manchons (30) dans les orifices (28) du support rigide (4) ;
- introduire les pions (26) dans lesdits manchons (30).

## Claims

1. A supply device of braking fluid for a braking system, comprising at least one reservoir (2) for supplying a master cylinder, and a rigid support (4) for said reservoir (2), the said reservoir (2) comprising means (14) for flow of braking fluid in braking system and comprises first attachment means (20) able to collaborate with second attachment means (22) borne by the rigid support (4), the first attachment means (20) and the second attachment means (22) comprising male (26), the male elements being formed by at least one stud, and female (28) elements collaborating with one another, and elastic means (30) being inserted between the male elements (26) and the female elements (28) **characterized in that** the means (14) for flow of braking fluid and the first attachment means (20) are separate, **in that** the female elements are orifices (28) made in the rigid support and **in that** the elastic means (30) are sleeve-shaped and **in that** the studs comprise means for locking the attachment of the reservoir (2) to the rigid support (4).

2. Supply device according to the preceding claim, **characterized in that** the means for locking at least one stud (26) are formed by an annular bulge (32) at an end of the stud that is remote from the lower wall (8) of the reservoir, the outside diameter of said bulge (32) being greater than the inside diameter of the sleeve (30) so that, when the stud (26) is introduced into the sleeve (30), the bulge is disposed on the opposite side from the lower wall (8) of the reservoir with respect to the sleeve (30) and forms a stop in the direction for extracting the stud from the sleeve.

3. Supply device according to one of the preceding claims, **characterized in that** the means for locking at least one stud are formed by a transverse passage (138b, 138c) made at an end of the stud (126b, 126c) that is remote from the lower wall (8) of the reservoir (2) and by a pin intended to penetrate into the passage (138b, 138c) so that, when the stud (26) is introduced into the sleeve (30), the passage (138b, 138c) is disposed on the opposite side from the lower wall (8) of the reservoir with respect to the sleeve (30) and so that the pin introduced into said passage (138b, 138c) forms a stop in the direction for extracting the stud (126b, 126c) from the sleeve.

4. Supply device according to one of the preceding claims, **characterized in that** the reservoir comprises, projecting from its lower wall (8), a housing (21) for receiving a brake fluid detector (19), and **in that** the rigid support (4) has roughly the shape of an L defining a cutout for receiving said housing.

5. Supply device according to one of Claims 1 to 4, **characterized in that** the reservoir (2) comprises, projecting from its lower wall (8), a housing (21) for receiving a brake fluid detector (19), and **in that** a spacer (240) is inserted between the stud (226a, 226b, 226c) and the lower wall (8) of the reservoir, said spacer (240) having a height (h) equal to the height (H) of said housing (21) and an outside diameter greater than the inside diameter of the sleeve (30) in order to bear against said sleeve.

6. Supply device according to one of the preceding claims, **characterized in that** the studs (26) are integrally formed with the reservoir (2).

7. Supply device according to any one of the preceding claims, **characterized in that** the sleeves (30) are made of elastomer.

8. Supply device according to one of the preceding claims, **characterized in that** the rigid support (4) is a plate fastened in an engine compartment of a motor vehicle.

9. Supply device according to one of the preceding claims, **characterized in that** the reservoir (2) is a main reservoir remote from the braking circuit, and **in that** the system also comprises a secondary reservoir arranged near the braking circuit and connected to the main reservoir, said secondary reservoir comprising pipes for supplying a master cylinder.

10. Method of installing the supply device according to any one of the preceding claims, **characterized in that** it comprises, inter alia, the steps of:
- fastening the rigid support (4) in the motor vehicle;
- introducing the sleeves (30) into the orifices (28) of the rigid support (4);
- introducing the studs (26) into said sleeves (30).

## Patentansprüche

1. Bremsflüssigkeitszuführvorrichtung für ein Bremssystem mit mindestens einem Behälter (2) zur Versorgung eines Hauptzylinders und einem starren Träger (4) für den Behälter (2), wobei der Behälter (2) Mittel (14) zum Strömen der Bremsflüssigkeit zum Bremssystem hin und erste Einrastmittel (20) aufweist, die mit am Befestigungsträger (4) ausgebildeten zweiten Einrastmitteln (22) zusammenwirken können, wobei die ersten (20) und die zweiten Einrastmittel (22) Steckelemente (26), die durch mindestens einen Stift gebildet sind, und Aufnahmeelemente (28) aufweisen, die miteinander zusammenwirken, und elastische Mittel (30), die zwischen den Steckelementen (26) und den Aufnahmeelementen (28) angeordnet sind, **dadurch gekennzeichnet, dass** die Strömungsmittel (14) und die ersten Einrastmittel (20) getrennt sind, die Aufnahmeelemente im starren Träger ausgebildete Öffnungen (28) sind, die elastischen Mittel (30) hülsenförmig sind und die Stifte Mittel zur Verriegelung der Rastverbindung des Behälters (2) am starren Träger (4) aufweisen.

2. Zuführvorrichtung nach dem vorhergehenden Anspruch, **dadurch gekennzeichnet, dass** die Mittel zur Verriegelung mindestens eines Stifts (26) durch eine ringförmige Verdickung (32) an einem von der unteren Wand (8) des Behälters entfernten Ende des Stifts gebildet sind, wobei der Außendurchmesser der Verdickung (32) größer ist als der Innendurchmesser der Hülse (30), so dass beim Einführen des Stifts (26) in die Hülse (30) die Verdickung in Bezug auf die Hülse (30) auf der Seite angeordnet ist, die zur unteren Wand (8) des Behälters entgegengesetzt ist, und einen Anschlag in Auszugsrichtung des Stifts aus der Hülse bildet.

3. Zuführvorrichtung nach einem der vorhergehenden Ansprüche, **dadurch gekennzeichnet, dass** die Mittel zur Verriegelung mindestens eines Stifts durch einen quer verlaufenden Durchgang (138b, 138c), der an einem von der unteren Wand (8) des Behälters (2) entfernten Ende des Stifts (126b, 126c) ausgebildet ist, und durch eine Klammer gebildet sind, die dazu vorgesehen ist, in den Durchgang (138b, 138c) zu dringen, so dass beim Einführen des Stifts (26) in die Hülse (30) der Durchgang (138b, 138c) in Bezug auf die Hülse (30) auf der Seite angeordnet ist, die zur unteren Wand (8) des Behälters entgegengesetzt ist, und die in den Durchgang (138b, 138c) eingesetzte Klammer einen Anschlag in Auszugsrichtung des Stifts (126b, 126c) aus der Hülse bildet.

4. Zuführvorrichtung nach einem der vorhergehenden Ansprüche, **dadurch gekennzeichnet, dass** der Behälter einen von seiner unteren Wand (8) hervorstehenden Sitz (21) zum Aufnehmen eines Bremsflüssigkeitsdetektors (19) aufweist und der starre Träger (4) im Wesentlichen eine L-Form hat, die eine Vertiefung zum Aufnehmen des Sitzes definiert.

5. Zuführvorrichtung nach einem der Ansprüche 1 bis 4, **dadurch gekennzeichnet, dass** der Behälter (2) einen von seiner unteren Wand (8) hervorstehenden Sitz (21) zum Aufnehmen eines Bremsflüssigkeitsdetektors (19) aufweist und ein Zwischenelement (240) zwischen dem Stift (226a, 226b, 226c) und der unteren Wand (8) des Behälters angeordnet ist, wobei die Höhe (h) des Zwischenelements (240) der Höhe (H) des Sitzes (21) entspricht und sein Außendurchmesser größer ist als der Innendurchmesser der Hülse (30), um an der Hülse in Anlage zu gelangen.

6. Zuführvorrichtung nach einem der vorhergehenden Ansprüche, **dadurch gekennzeichnet, dass** die Stifte (26) mit dem Behälter (2) einstückig ausgebildet sind.

7. Zuführvorrichtung nach einem der vorhergehenden Ansprüche, **dadurch gekennzeichnet, dass** die Hülsen (30) aus Elastomer hergestellt sind.

8. Zuführvorrichtung nach einem der vorhergehenden Ansprüche, **dadurch gekennzeichnet, dass** der starre Träger (4) eine Platte ist, die in einem Motorraum eines Kraftfahrzeugs befestigt ist.

9. Zuführvorrichtung nach einem der vorhergehenden Ansprüche, **dadurch gekennzeichnet, dass** der Behälter (2) ein vom Bremskreis beabstandeter Hauptbehälter ist und das System auch einen Sekundärbehälter aufweist, der nahe dem Bremskreis angeordnet und mit dem Hauptbehälter verbunden ist, wobei der Sekundärbehälter Rohre zur Versorgung eines Hauptzylinders aufweist.

10. Verfahren zum Anbringen der Zuführvorrichtung nach einem der vorhergehenden Ansprüche, **dadurch gekennzeichnet, dass** es unter anderem folgende Schritte umfasst:
- Befestigen des starren Trägers (4) im Kraftfahrzeug;
- Einführen der Hülsen (30) in die Öffnungen (28) des starren Trägers (4);
- Einführen der Stifte (26) in die Hülsen (30).
